# EUROPÄISCHE PATENTSCHRIFT

(11) **EP 1 055 547 B1**
(45) Veröffentlichungstag und Bekanntmachung des Hinweises auf die Patenterteilung: **18.02.2004**
(21) Anmeldenummer: 00110737.4
(22) Anmeldetag: 19.05.2000
(51) Int. Cl.: B61C 17/12

(54) **Schienenfahrzeugantriebskomponenten-Steuersystem**
Control system for the drive components of a railway vehicle
Système de commande des éléments de propulsion d'un véhicule ferroviaire

(30) Priorität: 19.05.1999 DE 19923019; 17.07.1999 DE 19933688
(43) Veröffentlichungstag der Anmeldung: 29.11.2000
(73) Patentinhaber: Voith Turbo GmbH & Co. KG, 89522 Heidenheim (DE)
(72) Erfinder: Tengler, Heinz, 89558 Böhmenkirch (DE)
(74) Vertreter: Dr. Weitzel & Partner

(56) Entgegenhaltungen:
- EP-A- 0 210 404
- DE-A- 4 039 005
- DE-A- 4 228 893
- DE-A- 4 239 711
- DE-A- 19 709 317

## Beschreibung

Die Erfindung betrifft ein Schienenfahrzeugantriebskomponenten-Steuersystem, im einzelnen mit den Merkmalen aus dem Oberbegriff des Anspruches 1; ferner ein Schienenfahrzeug mit einer derartigen Vorrichtung.

Bei Schienenfahrzeugen mit dieselhydraulischem, dieselmechanischem oder dieselelektrischem Antrieb erfolgt die Steuerung der einzelnen Antriebskomponenten, insbesondere beim dieselhydraulischem Antriebssystem die Steuerung der Getriebebaueinheit, insbesondere der hydrodynamischen Getriebebaueinheit, in der Regel über ein elektronisches Steuergerät, welches entweder in einem Schaltschrank im Innenraum des Fahrzeuges oder in der Nähe der entsprechenden Antriebskomponente angeordnet ist.

Dabei umfaßt das Steuergerät wenigstens einen Eingang, d. h. die Eingangsschaltung für einen Sensor, und wenigstens einen Ausgang, einen sogenannten Leistungsausgang für die Kopplung mit einem entsprechenden Aktor. Die Anpassung an die Bordspannung sowie die Erzeugung der internen Spannungsversorgung erfolgt im Steuergerät. Die Kopplung zur Fahrzeugsteuerung erfolgt dabei wenigstens indirekt mittels wenigstens einem übergeordneten Steuergerät. Dieses ermöglicht des weiteren indirekt die Koordination der Funktionen mit anderen Antriebskomponenten. Die erforderlichen Verbindungen zwischen den einzelnen Steuergeräten und den Einrichtungen zur Erfassung der physikalischen Größen in Form von Sensoren sowie der zur Beaufschlagung der Stelleinrichtungen erforderlichen Aktoren an den einzelnen Antriebskomponenten, insbesondere an der Getriebebaueinheit bei Antriebssystemen mit Verbrennungskraftmaschine als Antriebsmaschine und Getriebebaueinheit zur Leistungsübertraung unter Wandelung von Drehzahl und Drehmoment, welche beispielsweise als hydrodynamisch-mechanisches Verbundgetriebe ausgeführt ist, wird über eine Vielzahl von Einzelleitungen realisiert. Aufgrund der damit verbundenen hohen Anzahl möglicher Störstellen weisen derartige Systeme daher eine verringerte Zuverlässigkeit auf. Erhebliche räumliche Abstände zwischen den einzelnen Steuervorrichtungen, insbesondere bei Kopplung mit übergeordneten Steuersystemen, bedingen eine entsprechend aufwendige Kabelführung, welche durch das Vorsehen des entsprechenden Bauraumes am Schienenfahrzeug, entsprechender Aufhängungs- bzw. Haltevorrichtungen sowie Durchführungen an Zwischenwänden bzw. einzelnen Komponenten charakterisiert ist. Die Anzahl der an den einzelnen Komponenten vorgesehenen Steckplätze bestimmt dabei die Anzahl der möglichen herstellbaren Verbindungen. Die nachträgliche Erweiterung um zusätzliche Sensoren oder Magnetventile ist dabei nur noch mit aufwendigen Änderungen an der Verkabelung und an den Steckern möglich.

Des weiteren erfolgt die Vornahme von Regelungsvorgängen innerhalb des Steuergerätes, wobei beispielsweise bei Mikroprozessoren-Steuerungen dazu geeignete Regelalgorithmen in der Software des Steuergerätes integriert sind. Der Istwert für die Regelung wird von den Sensoren geliefert und direkt über die Eingangsschaltung dem Mikroprozessor zugeführt. Die Stellgröße vom Mikroprozessor wird über geeignete Ausgangsschaltungen zu den Aktoren am Getriebe weitergegeben.

Eine derart gattungsgemäße Steuereinrichtung für den Einsatz in Fahrzeugen ist aus der Druckschrift DE 40 39 005 A1 vorbekannt. Auch diese umfasst beispielsweise eine Steuereinrichtung, die einer Getriebebaueinheit zugeordnet ist und mit entsprechenden Sensoren oder Stelleinrichtungen gekoppelt ist. Die Kopplung mit einer übergeordneten Fahrsteuerung erfolgt hier ebenfalls über entsprechende Leitungsverbindungen mit entsprechender Kabelführung.

Aus der Druckschrift DE 197 09 317 A1 ist ein Verfahren und eine Vorrichtung zur Steuerung eines Fahrzeuges bekannt, welches wenigstens eine Quelle für wenigstens eine Resource und wenigstens einen Verbraucher umfasst, der diese Resource verbraucht. Des weiteren ist wenigstens ein Koordinator vorgesehen, der abhängig vom Potential der Quelle und dem Resourcenbedarf des Verbrauchers die Resource dem Verbraucher zuteilt. Dabei wird ein sogenannter Master Controller verwendet, der unter anderem ein Interface umfasst, an dem verschiedene Bussysteme angeschlossen sind. Dabei stellt ein Bussystem die Kommunikation zwischen dem Master und beispielsweise dem ein Antriebsmoment steuernden Element her. Ferner verbindet dieser auch den Master mit einem Steuergerät zur Motorsteuerung und einem Steuergerät zur Getriebesteuerung. Des weiteren ist der Bus über entsprechende Leitungen mit Messeinrichtungen verbunden. Diese erfassen die zur Steuerung, beispielsweise des Antriebsmomentes, auszuwählenden Betriebsgrößen des Motors und/oder des Fahrzeuges. Weitere Bussysteme verbinden den Master Controller bzw. sein Interface mit anderen Elementen, beispielsweise zur Bremsensteuerung. Auch hier erfolgt die Kommunikation über feste Leitungsverbindungen. Des weiteren weist jede Steuerung ihr eigenes Steuergerät auf. Erhebliche räumliche Abstände zwischen den einzelnen Steuervorrichtungen, insbesondere bei der Kopplung mit dem übergeordneten Steuersystem, beispielsweise der Fahrsteuerung, bedingen eine entsprechende Kabelführung.

Der Erfindung lag daher die Aufgabe zugrunde, ein Schienenfahrzeugantriebskomponenten-Steuersystem der eingangs genannten Art weiterzuentwickeln. Dabei stehen neben einer Reduzierung der einzelnen möglichen Störstellen eine Vereinfachung der Kabelführung sowie die Reduzierung des Aufwandes bei der Integration einer Steuervorrichtung in ein Antriebssystem von Schienenfahrzeugen im Vordergrund. Des weiteren soll eine Einbeziehung weiterer physikalischer Größen durch das Vorsehen entsprechender Erfassungsmittel auf einfache Art und Weise mit der Steuereinrichtung möglich werden. Dies bedeutet, daß eine Integration neuer Sensoren ohne entsprechende erhebliche Modifikationen vonstatten gehen sollte. In Analogie gilt dies auch für die Koordination der Funktionen mit anderen Antriebskomponenten, d. h. beispielsweise der Realisierung eines geeigneten Antriebsmaschinen-Getriebemanagements. Derartige Funktionen wurden bisher über eine übergeordnete Fahrsteuerung oder ein spezielles Antriebssteuergerät realisiert.

Die erfindungsgemäße Lösung ist durch die Merkmale der Ansprüche 1, 16 und 17 charakterisiert. Vorteilhafte Ausgestaltungen sind in den Unteransprüchen wiedergegeben.

Erfindungsgemäß weist das Schienenfahrzeugantriebskomponenten-Steuersystem die Merkmale des Anspruchs 1 auf. Es umfaßt mindestens drei Komponenten eine erste Komponente, eine zweite Komponente und eine dritte Komponente. Die erste Komponente wird dabei von einer Einrichtung zur Erfassung und/oder Auswertung wenigstens einer, mittels wenigstens einer Einrichtung zur Erfassung wenigstens einer physikalischen Größe generierten Signales gebildet. Die zweite Komponente wird von einer Einrichtung zur wenigstens mittelbaren Ansteuerung einer Stelleinrichtung zur wenigstens mittelbaren Beeinflussung der Funktionsweise der Antriebskomponente gebildet, während die dritte Komponente als Einrichtung zur Anpassung der Signale an übergeordnete Steuerungen und/oder Leitungsverbindungen ausgeführt ist. Die einzelnen Einrichtungen sind dabei unter Bildung eines sogenannten virtuellen Steuergerätes dezentral angeordnet, d.h. in räumlicher Entfernung und über ein entsprechendes Kommunikationsnetzwerk miteinander gekoppelt, wobei dieses Mittel zur seriellen Datenübertragung umfaßt. Vorzugsweise findet als Datenkommunikationsnetzwerk ein CAN-Bus Verwendung. Virtuelles Steuergerät bedeutet dabei, daß die einzelnen Komponenten nicht in einem gemeinsamen Gehäuse untergebracht sind, sondern separat einzeln oder auch in erheblich räumlicher Entfernung voneinander angeordnet sein können und nur hinsichtlich ihrer Funktion gemeinsam die Funktion eines Steuergerätes ausführen.

Unter Einrichtung zur elektronischen Steuerung der Antriebskomponente werden dabei die Komponenten subsumiert, welche, obwohl räumlich getrennt und für sich angeordnet die Funktion des Steuergerätes übernehmen. Unter dem Schienenfahrzeugantriebskomponenten-Steuersystem wird die Gesamtheit aus Steuereinrichtung sowie die Verbindungen zur Steuereinrichtung und zur anzusteuernden Antriebskomponente sowie der Stelleinrichtungen verstanden.

Die erfindungsgemäße Lösung ermöglicht es, die einzelnen Einrichtungen zur Erfassung und/oder Auswertung von Signalen bzw. zur Ansteuerung von Stelleinrichtungen und die Einrichtung zur Anpassung der Signale an übergeordnete Steuerungen an beliebiger Stelle im Schienenfahrzeug anzuordnen und miteinander in entsprechender Weise zu koppeln. Dabei werden vorzugsweise die Einrichtung zur Erfassung und/oder Auswertung der mittels einer Einrichtung zur Erfassung von physikalischen Größen generierten Signale sowie die Einrichtung zur wenigstens mittelbaren Ansteuerung der Stelleinrichtung einer Antriebskomponente vorzugsweise in unmittelbarer räumlicher Nähe der entsprechenden Antriebskomponente angeordnet.

Dadurch wird es möglich, die erforderliche Leitungslänge zur Kopplung mit diesen Einrichtungen von der Antriebskomponente ausgehend erheblich zu reduzieren, während bei entsprechender Anordnung der Einrichtung zur Anpassung der Signale in räumlicher Entfernung die Anzahl der erforderlichen Leitungsstränge auf ein Minimum reduziert werden kann, da das Mittel zur seriellen Datenübertragung, beispielsweise Kommunikationsnetzwerk, bereits über ein serielles Leitungspaar realisiert werden kann. Die Hardware kann dabei derart ausgeführt werden, daß bis zu einem gewissen Umfang zusätzliche weitere Funktionen ausgeführt werden können, womit die Anzahl der unterschiedlichen Steuergeräte im Antriebsstrang erheblich reduziert wird, da z. B. die Hardware für die Austeuerung der Aktoren des Getriebes, der Kühlanlage und/oder des Motorreglers identisch ausgeführt sein kann und somit eine Einrichtung für alle die genannten Systeme ausreichend wäre.

Ein weiterer wesentlicher Vorteil besteht darin, daß über die Einrichtung zur Anpassung der Signale eine Kopplung zu einer übergeordneten Steuerung, beispielsweise der Schienenfahrzeugsteuerung, möglich ist. Die Einrichtung zur Anpassung verfügt dazu über eine geeignete Signalschnittstelle, zum Beispiel einen MV-Bus, wodurch das übergeordnete Steuergerät entfallen kann. Ein weiterer wesentlicher Vorteil besteht darin, daß die Koordination der Funktionen einer Antriebskomponente mit der von anderen Antriebskomponenten direkt durch das erfindungsgemäße Steuerungssystem erfolgen kann. Dazu wird das System um geeignete Komponenten erweitert, zum Beispiel ein sogenanntes Interface zur Antriebsmaschinenregeleinrichtung, welches direkt an das interne Datennetzwerk zwischen den einzelnen Komponenten der Steuereinrichtung angeschlossen wird. Das Interface stellt die Verbindung zu einer Schienenfahrzeugsteuerung her. Die Antriebsmaschinenregeleinrichtung wird aus Sensorbox und Aktorbox gebildet. Die Hardware des Interfaces besteht vorzugsweise aus einer der bereits bestehenden Einheiten, Sensorbox oder Aktorbox.

Die einzelnen Einrichtungen, insbesondere die Einrichtung zur Erfassung und/oder Auswertung der mittels Sensoren erfaßbaren bzw. generierbaren Signale und die Einrichtung zur Ansteuerung der Stelleinrichtung zur wenigstens mittelbaren Beeinflussung der Funktionsweise der Antriebskomponenten sind dabei vorrichtungsmäßig vorzugsweise jeweils in einem Gehäuse integriert, welches der Antriebskomponente in entsprechender Weise entweder in räumlich geringem Abstand zugeordnet ist oder/auch in der Antriebskomponente integriert werden kann. Aufgrund der Kopplung zwischen den Einrichtungen über das Kommunikationsnetzwerk ist kein gemeinsames Steuergerätgehäuse für die einzelnen Einheiten erforderlich. Dies ist vor allem dann von erheblichem Vorteil, wenn zusätzliche Einrichtungen zur Erfassung von die Funktionsweise der Antriebskomponente beschreibenden physikalischen Größen nachzurüsten sind.

Unter einem weiteren Aspekt der Erfindung fungiert das Datennetz- bzw. Kommunikationsnetzwerk gleichzeitig auch als virtueller Zentralspeicher, auf welchen jeder Teilnehmer zugreifen kann. Die Daten, welche zyklisch oder fortlaufend über das Netz übertragen werden, sind dabei für jeden Teilnehmer, bzw. für jede Steuerung eines Aggregates verfügbar. Einrichtungen zur Erfassung von die Funktionsweise der Antriebskomponente beschreibenden Größen nachzurüsten sind.

Die Einrichtungen zur Erfassung der die Funktionsweise der Antriebskomponente umschreibenden physikalischen Größen sind beispielsweise in Form von Sensoren ausgeführt. Die Ansteuerung der Stelleinrichtungen zur Beeinflussung der Funktionsweise der Antriebskomponente erfolgt über entsprechende Aktoren, welche die Stelleinrichtungen unmittelbar beaufschlagen. Die Auswahl und Verwendung der entsprechenden Sensoren bzw. Aktoren erfolgt dabei in Abhängigkeit des konkreten Einsatzfalles und liegt im Ermessen des zuständigen Fachmannes. Bezüglich der Zuordnung der Einrichtung zur Erfassung und/oder Auswertung des, mittels wenigstens einer Einrichtung zur Erfassung einer physikalischen Größe generierten Signales und/oder der Einrichtung zur wenigstens mittelbaren Ansteuerung der Stelleinrichtung zur Beeinflussung der Funktionsweise der Antriebskomponente kann unterschiedlich erfolgen. Besonders vorteilhaft ist dabei eine Ausführung, wobei jeder Antriebskomponente lediglich eine entsprechende Einrichtung zur Auswertung und/oder Erfassung der mittels Sensoren generierten Signale und/oder eine Einrichtung zur wenigstens mittelbaren Ansteuerung der Stelleinrichtung zur wenigstens mittelbaren Beeinflussung der Funktionsweise der Antriebskomponente zugeordnet sind. In diesem Fall weisen die Einrichtungen eine Vielzahl von Eingängen bzw. Ausgängen auf, die mit den entsprechenden Einrichtungen zur Erfassung der physikalischen Größen und/oder den Einrichtungen zur Beaufschlagung der Stellglieder koppelbar sind. Denkbar ist jedoch auch eine direkte Zuordnung zwischen den einzelnen Einrichtungen zur Erfassung der physikalischen Größen und/oder der Einrichtung zur wenigstens mittelbaren Ansteuerung der Stelleinrichtung zur wenigstens mittelbaren Beeinflussung der Funktionsweise der Antriebskomponente mit den Aktoren. Somit sind in diesem Fall jedem Sensor und jedem Aktor eine entsprechende Einrichtung zugeordnet, wobei die Verknüpfung über das Kommunikationsnetzwerk erfolgt. Beide Lösungen bieten den Vorteil, daß eine Nachrüstung mit zusätzlichen Erfassungseinrichtungen zur Erfassung weiterer, die Funktionsweise einzelner Antriebskomponenten beschreibender Größen, in das bestehende Gesamtsystem mit einfachen Mitteln möglich ist, indem die entsprechenden Einrichtungen lediglich an das bereits bestehende Kommunikationsnetzwerk angebunden werden müssen. Bezüglich der Zuordnung der Einrichtung zur Anpassung der Signale gegenüber den übrigen Komponenten der Steuereinrichtung bestehen ebenfalls eine Vielzahl von Möglichkeiten. Diese kann dabei derart erfolgen:
a) Zuordnung einer Einrichtung zur Anpassung der Signale an eine Einrichtung zur Erfassung und/oder Auswertung der mittels der Einrichtung zur Erfassung von physikalischen Größen generierten Signale und/oder einer Einrichtung zur wenigstens mittelbaren Ansteuerung der Stellglieder zur wenigstens mittelbaren Beeinflussung der Funktionsweise einer Antriebskomponente.
b) Wie a), wobei der einzelnen Antriebskomponente eine Vielzahl von Einrichtungen zur Erfassung und/oder Auswertung der mit der Einrichtung zur Erfassung von physikalischen Größen generierten Signale und/oder eine Vielzahl von Einrichtungen zur wenigstens mittelbaren Ansteuerung der Stelleinrichtung einer Antriebskomponente zugeordnet sind.
c) Wie a) oder b), wobei die Einrichtung zur Anpassung der Signale Bestandteil einer oder mehrerer weiterer Steuereinrichtungen anderer Antriebskomponenten ist.

Der konkrete Aufbau der einzelnen Einrichtungen zur Auswertung und/oder Erfassung von Signalen und/oder der Einrichtung zur wenigstens mittelbaren Ansteuerung der Stelleinrichtung der Antriebskomponenten kann unterschiedlich realisiert werden. Die konkrete konstruktive Ausgestaltung und vorrichtungsmäßige Umsetzung hängt dabei vom Einsatzfall ab und liegt im Ermessen des zuständigen Fachmannes. Für die Ausführung der Einrichtung zur Erfassung und/oder Auswertung der mittels wenigstens einer Einrichtung zur wenigstens mittelbaren Erfassung physikalischer Größen generierten Signale kann dabei die folgenden Komponenten umfassen: eine Sensorauswerteinheit, eine Vergleichseinheit sowie eine Schnittstelleneinheit, wobei die Schnittstelleneinheit der Kopplung mit dem Kommunikationsnetzwerk dient. Diese Aussage gilt in Analogie auch für die Einrichtung zur wenigstens mittelbaren Ansteuerung der Stelleinrichtung zur wenigstens mittelbaren Beeinflussung der Funktionsweise der Antriebskomponente. Diese umfaßt ebenfalls wenigstens eine Schnittstelleneinheit, welche mit einer Stellgrößenermittlungseinheit verbunden ist. Entsprechend der Zuordnung der Einrichtungen zur Antriebskomponente, insbesondere zu den Sensoren und/oder Aktoren sind eine entsprechende Anzahl von Eingängen und Ausgängen an den Einrichtungen vorzusehen.

Unter einem weiteren Aspekt der Erfindung erfolgt die Anpassung der Spannungsversorgung an die Bordspannung, insbesondere zum Zwecke eines Überspannungsschutzes bzw. Verpolungsschutzes entweder zentral an der Einrichtung zur Anpassung der Signale oder dezentral an jeder der Einheiten. Durch die zentrale Ausführung der Einrichtung zur Anpassung der Bordspannung in Form der Einrichtung zur Anpassung der Signale kann die thermische Belastung der direkt an der Antriebskomponente installierten Einheiten erheblich reduziert werden.

Unter einem weiteren Aspekt der Erfindung weist die Vorrichtung zur Steuerung der Antriebskomponente eine weitere zweite Steuereinrichtung auf, welche der Schienenfahrzeugsteuerung entspricht, wobei die Kopplung über die Einrichtung zur Anpassung der Signale erfolgt. Die Einrichtung zur Anpassung, das sogenannte Gateway, stellt dann die Verbindung zur Schienenfahrzeugsteuerung direkt her und verfügt dazu über eine geeignete Signalschnittstelle, beispielsweise einen MV-Bus. Das übergeordnete Steuergerät kann in diesem Falle entfallen.

Als zu steuernde und/oder zu regelnde Antriebskomponenten kommen beispielsweise die nachfolgend genannten in Betracht:
- Antriebsmaschine und/oder Nebenaggregate, beispielsweise Anlasser, Kraftstoffpumpe u.s.w.
- Einrichtungen zur Drehzahl-/Drehmomentenwandlung, beispielsweise in Form von Getriebebaueinheiten
- Leistungsübertragungseinheiten
- Kühlanlage für Antriebsmaschine und Getriebe (Kühlwasser, Ladeluft)
- Hilfsaggregate, w. z. B. Bordgenerator, Klimakompressor und Druckluftkompressor

Bei Einsatz der erfindungsgemäßen Lösung zur Steuerung einer Getriebebaueinheit wird die Sensorbox und die Aktorbox direkt an den Getriebekabelbaum angeschlossen bzw. in diesen integriert. Dabei werden zunächst alle Sensorsignale und alle Aktorsignale in jeweils einer Einheit, d. h. der Einrichtung zur Erfassung und/oder Auswertung von Signalen bzw. der Einrichtung zur wenigstens mittelbaren Ansteuerung der Stelleinrichtung verarbeitet, welche vorzugsweise direkt an der Antriebskomponente oder in dieser angeordnet ist. Aus dieser Anordnung ergeben sich dabei erhebliche Vereinfachungen bei der Ausführung des Getriebekabelbaums sowie bei der Ausführung der Verbindung zwischen der Getriebebaueinheit und der Steuereinrichtung. Das Gesamtsystem kann dabei problemlos um weitere Sensoren und Aktoren erweitert werden. Diese Aussage ist auch auf andere Antriebskomponenten übertragbar. Unter einem weiteren Aspekt der Erfindung ist auch eine weitere Dezentralisierung denkbar, bis hin zu jeweils einer Verarbeitungseinheit für jeden Sensor und jeden Aktor.

Neben der dezentralisierten Ausführung der Steuervorrichtung werden auch die damit vorgenommenen Steuer- bzw. Regelvorgänge dezentralisiert. Damit ergibt sich ein Regelalgorithmus, der in einem virtuellen Steuergerät, bestehend aus mehreren räumlich getrennten Hardwarekomponenten, abläuft.

Die beschriebene Anordnung ermöglicht des weiteren unter einem weiteren Aspekt der Erfindung die zentrale Abspeicherung und Weitergabe von Fehlerereignissen aller Antriebskomponenten. Damit wird der Kundendienst vereinfacht, da ja nur noch ein Diagnosesystem für den Antriebsstrang erforderlich ist und bereits eine Filterung und Vorverarbeitung von Diagnoseinformationen vor der Weitergabe an die Schienenfahrzeugsteuerung möglich wird. Die Steuervorrichtung, d. h. das Steuerungssystem wertet dazu die Diagnoseschnittstellen aller elektronischen Steuergeräte an den Antriebskomponenten aus.

Erfindungsgemäß wird die Antriebskomponentensteuerung in Schienenfahrzeugen angebracht. Dabei ist es unerheblich, wie das Antriebssystem im einzelnen aufgebaut ist, insbesondere ob die Leistungsbereitstellung mittels einer Verbrennungskraftmaschine oder eines Elektromotors erfolgt und des weiteren wie die Leistungsübertragung im einzelnen vorgenommen wird, ob über ein hydrodynamisch-mechanisches Verbund-Getriebe, ein mechanisches Getriebe, ein hydrostatisches Getriebe oder eine Einheit bestehend aus Generator, Elektromotor und Wechselrichter.

An die elektrische Leistungsübertragung, insbesondere die Steuerung des Generators, der Fahrmotoren sowie der Wechselrichter in Schienenfahrzeugen mit Dieselmotorenantrieb, werden dabei grundsätzlich ähnliche Anforderungen gestellt, wie an die Steuerung der Leistungsübertragung mittels eines mechanischen oder Verbundgetriebes beispielsweise in Form eines hydrodynamisch-mechanischen oder eines hydrostatisch-mechanischen Verbundgetriebes. Auch die Koordination mit den Funktionen der anderen Antriebskomponenten stellt die gleichen Anforderungen an die Steuerung. Bei Schienenfahrzeugen mit dieselektrischem Antrieb werden dabei die Fahrmotoren und/oder Generatoren vorzugsweise von Maschinen gebildet, die nach dem Transversalflußprinzip arbeiten.

Die erfindungsgemäße Lösung bedeutet neben einer Dezentralisierung der vorrichtungsmäßigen Ausführung einer Steuervorrichtung, insbesondere die Unterteilung in einzelne Komponenten, auch eine Dezentralisierung der einzelnen Steuer- und Regelungsfunktionen. Diese Dezentralisierung führt dazu, daß das Gesamtsystem auf einfache Art und Weise zur Realisierung weiterer Funktionen modifizierbar ist.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung anhand eines Blockschaltbildes den Grundaufbau und das Grundprinzip einer erfindungsgemäß gestalteten Vorrichtung zur Steuerung einer Getriebebaueinheit;
- Figur 2: verdeutlicht eine Weiterentwicklung gemäß Figur 1 mit Zuordnung einer gemeinsamen Einrichtung zur Anpassung von Signalen zu einer Vielzahl von Aktorenboxen und Sensorboxen; anhand einer gesamten Antriebsanlage
- Figur 3: verdeutlicht in schematisch vereinfachter Darstellung eine Möglichkeit der räumlichen Zuordnung der einzelnen Komponenten der erfindungsgemäßen Vorrichtung zur Steuerung einer Getriebebaueinheit.

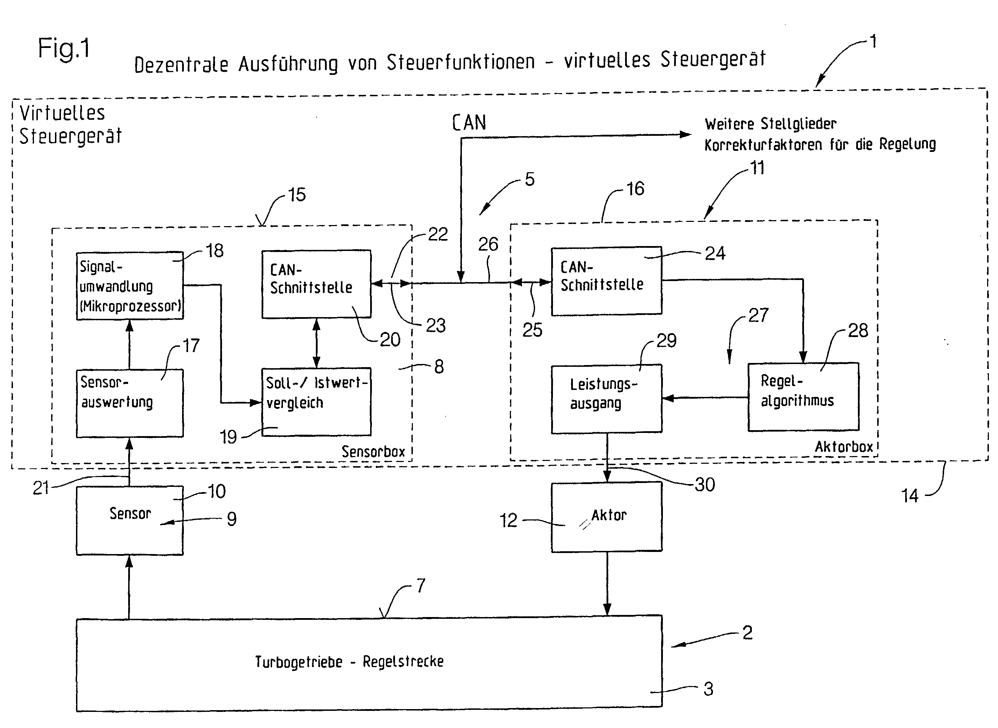

Die Figur 1 verdeutlicht in schematisch vereinfachter Darstellung anhand eines Blockschaltbildes den Aufbau und die Funktionsweise einer erfindungsgemäß gestalteten Vorrichtung 1 zur elektronischen Steuerung einer Antriebskomponente 2 in Schienenfahrzeugen, wobei die Antriebskomponente 2 in Form eines Turbogetriebes 3, d. h. eines hydrodynamisch-mechanischen Verbundgetriebes ausgeführt ist. Die Vorrichtung 1 wird in diesem Fall auch als Schienenfahrzeuggetriebesteuersystem bezeichnet. Die Vorrichtung 1 zur elektronischen Steuerung einer Antriebskomponente 2, insbesondere des Turbogetriebes 3, umfaßt eine Einrichtung 4 zur elektronischen Steuerung des Turbogetriebes 3, welche auch als Schienenfahrzeuggetriebesteuereinrichtung bezeichnet wird. Die Schienenfahrzeuggetriebesteuereinrichtung bzw. die Einrichtung 4 zur elektronischen Steuerung des Turbogetriebes 3 umfaßt mindestens drei Einzelkomponenten, welche beliebig dem Turbogetriebe 3 zugeordnet werden können, und die über ein Kommunikationsnetzwerk 5, welches beispielsweise als leistungsfähiges serielles Datennetzwerk ausgeführt ist, verbunden sind. Das Kommunikationsnetzwerk 5 kann beispielsweise in Form eines CAN-Busses 6 ausgeführt sein. Vorzugsweise sind wenigstens zwei der Komponenten in unmittelbarer räumlicher Nähe, vorzugsweise am Gehäuse 7 des Turbogetriebes 3 angeordnet. Die erste Komponente wird dabei von einer Einrichtung 8 zur Erfassung und/oder Auswertung der mittels wenigstens einer Einrichtung 9 zur Erfassung von wenigstens einer physikalischen Größe generierten Signale gebildet wird. Die Einrichtung 9 zur Erfassung von wenigstens einer physikalischen Größe und zur Generierung eines entsprechenden Signales für die Einrichtung 8 zur Erfassung und/oder Auswertung der mittels der Einrichtung 9 generierten Signale umfaßt wenigstens einen Sensor 10. Die Einrichtung 8 zur Erfassung und/oder Auswertung der mittels der Einrichtung 9 zur Erfassung von wenigstens einer physikalischen Größe generierten Signales wird auch als Einheit zur Auswertung der Sensorsignale, insbesondere Sensorbox bezeichnet. Die zweite Komponente wird von einer Einrichtung 11 zur wenigstens mittelbaren Ansteuerung einer Stelleinrichtung zur wenigstens mittelbaren Beeinflussung der Funktionsweise der Antriebskomponente 2, hier des Turbogetriebes 3, gebildet. Die Ansteuerung der Stelleinrichtung der Antriebskomponente 2, hier des Turbogetriebes 3, erfolgt durch Ansteuerung entsprechender Aktoren 12. Als Stelleinrichtungen der Antriebskomponente 2 fungieren dabei beispielsweise elektrohydraulische Schalteinrichtungen in Form von Magnetund Proportionalventileinrichtungen zur Betätigung der Schalt- und/oder Stelleinrichtungen des leistungsübertragenden Elementes, welche eine Betätigung der einzelnen Elemente der Kupplungs- und/oder Bremseinrichtungen ermöglichen. Dabei besteht die Möglichkeit, daß die Aktoren in die Stelleinrichtungen der Antriebskomponente wenigstens teilweise integriert sind. Als dritte Komponente 13 fungiert eine Einrichtung zur Anpassung von Signalen an übergeordnete Steuereinrichtungen oder Signalleitungen, welche auch als Gateway bezeichnet wird. Die Einrichtung 13 übernimmt dabei die Verbindung unter anderem zur Schienentfahrsteuerung oder anderen Komponenten des Antriebsstranges. Die drei Komponenten, die Einrichtung 8 zur Erfassung und/oder Auswertung der mittels der Einrichtung 9 zur Erfassung von wenigstens einer physikalischen Größe generierten Signale, die Einrichtung 11 zur wenigstens mittelbaren Ansteuerung wenigstens einer Stelleinrichtung zur wenigstens mittelbaren Beeinflussung der Funktionsweise der Antriebskomponente 2 und die Einrichtung 13 zur Anpassung der Signale an übergeordnete oder andere Steuereinrichtungen oder Signalleitungen bilden dabei ein sogenanntes virtuelles Steuergerät 14. Dies bedeutet, daß hardwaremäßig keine Anordnung der einzelnen drei Komponenten in einem gemeinsamen Gehäuse und die Zuordnung zur Antriebskomponente 2 erfolgen muß, sondern die Einrichtung zur elektronischen Steuerung 4 des Turbogetriebes 3 einen dezentralen Aufbau aufweist. Dazu sind die Einrichtungen 8 zur Erfassung und/oder Auswertung der mittels der Einrichtungen 9 zur Erfassung von wenigstens einer physikalischen Größe generierten Signale und die Einrichtung 11 zur wenigstens mittelbaren Ansteuerung wenigstens einer Stelleinrichtung zur Beeinflussung der Funktionsweise wenigstens einer Antriebskomponente vorzugsweise in jeweils einem Gehäuse 15 bzw. 16 integriert. Diese sind dann der Antriebskomponente 2 unmittelbar zugeordnet, vorzugsweise am Gehäuse 7 angeordnet. Denkbar ist auch eine Integration im Gehäuse der entsprechenden Antriebskomponenten. Für die Anordnung der Einrichtung 13 zur Anpassung der Signale an übergeordnete Steuereinrichtungen oder Signalleitungen bestehen dabei mehrere Möglichkeiten, diese kann den beiden Einrichtungen, der Einrichtung 8 und der Einrichtung 11 in räumlicher Nähe zugeordnet sein oder aber in entsprechendem räumlichen Abstand, beispielsweise im Schaltschrank im Schienenfahrzeug, angeordnet werden. Die 8 und Kopplung der einzelnen Komponenten, insbesondere der Einrichtungen 8 und 11 sowie 13 erfolgt, wie bereits beschrieben, über ein Kommunikationsnetzwerk 5, beispielsweise in Form eines sogenannten CAN-Busses. Auch bei räumlich getrennter Anordnung zwischen den Einrichtungen 8, 11 und 13 reduziert sich somit die Anzahl der Leitungsverbindungen, da lediglich eine Kopplung über ein serielles Leitungspaar ausreichend ist.

Die konkrete Ausführung der einzelnen Komponenten der Einrichtung 4 zur elektronischen Steuerung der Antriebskomponente 2, insbesondere des Turbogetriebes 3, kann auf verschiedene Art und Weise realisiert werden. Der konkrete Aufbau der einzelnen Komponenten, d. h. der Einrichtung 8 zur Erfassung und/oder Auswertung der generierten Signale und/oder der Einrichtung 11 zur Ansteuerung der Stelleinrichtung zur wenigstens mittelbaren Beeinflussung der Funktionsweise der Antriebskomponente und/oder der Einrichtung 13 zur Anpassung der Signale an übergeordnete Steuereinrichtung oder Signalleitungen erfolgt entsprechend den Erfordernissen des Einsatzfalles und liegt im Ermessen des zuständigen Fachmannes, insbesondere hinsichtlich der verwendeten und miteinander verknüpften elektronischen Bauelemente. Der Grundaufbau für die einzelnen Komponenten kann jedoch wie folgt beschrieben werden:

Die Einrichtung 8 zur Erfassung und/oder Auswertung der mittels der Einrichtung 9 generierten Signale umfaßt wenigstens eine Sensorauswertungseinheit 17, die wenigstens mittelbar mit einer Signalumwandlungseinheit 18 gekoppelt ist, der eine Vergleichseinheit 19 nachgeordnet ist, die mit einer Schnittstelleneinheit 20 zur Kopplung mit dem Kommunikationsnetzwerk 5 verbunden ist. Die Einrichtung 8 zur Erfassung und/oder Auswertung der generierten Signale umfaßt dazu wenigstens einen Eingang 21, welcher mit der Sensorauswertungseinheit 17 verbunden ist. Es kann ein weiterer Eingang 22 vorgesehen werden, welcher gleichzeitig auch die Funktion eines Ausgangs 23 übernimmt und die Kopplung der Schnittstelleneinheit 20 mit dem Kommunikationsnetzwerk 5 ermöglicht. Vorrichtungsmäßig können dabei Eingang 22 und 23 zusammengefaßt werden. Dies bedeutet, daß die Einrichtung 8 über das Kommunikationsnetzwerk 5 Informationen in Form von Signalen zur Realisierung von bestimmten Steuer- und/oder Regelvorgängen erhält und entsprechend gebildete Stellgrößen, welche auf der Auswertung der mittels der Einrichtungen 8 zur Erfassung von wenigstens einer physikalischen Größe erfaßten Größen anderen Steuerungssystemen und/oder der Einrichtung 11 zur Ansteuerung wenigstens einer Stelleinrichtung zur wenigstens mittelbaren Beeinflussung der Funktionsweise der Antriebskomponente 2 bereitstellt. In Analogie dazu weist die Einrichtung 11 ebenfalls eine Schnittstelleneinheit 24 auf, welche mit einem Eingang 25 der Einrichtung 11 gekoppelt ist, wobei die Schnittstelleneinheit 24 des weiteren mit einem Ausgang 26 der Einrichtung 11 verbunden ist. Der Eingang 25 und der Ausgang 26 können auch hier vorrichtungsmäßig zusammengefaßt werden. Die Schnittstelleneinheit ist in der Einrichtung zur wenigstens mittelbaren Ansteuerung 11 wenigstens einer Stelleinrichtung zur wenigstens mittelbaren Beeinflussung der Funktionsweise einer Antriebskomponente 2 mit einer Einheit 27 zur Bildung der Stellgröße verbunden, wobei die Einrichtung 27 beispielsweise eine Einrichtung zum Durchlaufen eines Regelalgorithmus 28 mit entsprechendem Leistungsausgang 29 umfaßt, und einen weiteren Ausgang 30 der Einrichtung 11 bildet bzw. mit diesem gekoppelt ist, welcher mit dem Aktor 12 verbindbar ist.

Der in der Figur 1 beschriebene Aufbau der Einrichtungen 8 und 11 stellt dabei lediglich ein Beispiel dar. Modifikationen in Abhängigkeit des konkreten Einsatzfalles sind denkbar und liegen im Ermessen des zuständigen Fachmannes.

Mit der erfindungsgemäß gestalteten Einrichtung 4 zur elektronischen Steuerung des Turbogetriebes 3 können unterschiedliche Steuer- und/oder Regelaufgaben realisiert werden. Die mittels dem virtuellen Steuergerät 14 zu verarbeitenden Größen und/oder die erzeugten Größen werden dabei aus der Regelstrecke 31 der Antriebskomponente bereitgestelllt bzw. in der Regelstrecke bei Ausführung der entsprechenden Regelaufgaben umgesetzt.

Im einfachsten und vorzugsweise angewendeten Fall erfolgt für eine Antriebskomponente 2, insbesondere eine Turbogetriebebaueinheit 3, die Zuordnung der einzelnen Elemente des virtuellen Steuergerätes 14 zur Turbogetriebebaueinheit 3 derart, daß jeweils eine Einrichtung zur Erfassung und/oder Auswertung 8 einer Vielzahl von Einrichtungen 9 zur Erfassung von wenigstens einer physikalischen Größe, welche die Funktionsweise der Turbogetriebebaueinheit 3 wenigstens mittelbar beschreiben, zugeordnet ist. Dies gilt in Analogie auch für die Zuordnung der Einrichtung 11 zur wenigstens mittelbaren Ansteuerung wenigstens einer Stelleinrichtung zur wenigstens mittelbaren Beeinflussung der Funktionsweise der Antriebskomponente. Dabei kann eine Einrichtung 11 einer Mehrzahl von Aktoren 12, welche auf die Stelleinrichtungen in der Getriebebaueinheit wirken, zugeordnet sein. In diesem Fall sind beispielsweise die Sensorbox und Aktorbox direkt an das Leitungssystem der Getriebebaueinheit 3 angeschlossen bzw. im Getriebekabelbaum integriert. Dabei werden alle Sensorsignale und alle Aktorsignale in jeweils einer entsprechenden Einheit, d. h. der Sensorbox oder der Aktorbox, bearbeitet. In einer weiterbildenden Ausführung der erfindungsgemäßen dezentralen Ausgestaltung der Einrichtung 4 zur elektronischen Steuerung der Turbogetriebebaueinheit 3 kann jeder Einrichtung zur Erfassung einer physikalischen Größe 9 eine entsprechende Einrichtung zur Erfassung und/oder Auswertung des mittels der Einrichtung 9 generierten Signales bzw. jedem Aktor 12 eine Einrichtung 11 zur wenigstens mittelbaren Ansteuerung einer Stelleinrichtung zur Beeinflussung der Funktionsweise der Antriebskomponente, insbesondere des Turbogetriebes 3, zugeordnet werden. Aus dieser weiterbildenden Anordnung ergeben sich dabei erhebliche Vereinfachungen bei der Ausführung des Kabelbaumes, insbesondere des Getriebekabelbaumes, sowie bei der Ausführung der Verbindung zwischen der Turbogetriebebaueinheit 3 und der Steuerung. Das System kann in diesem Fall problemlos um weitere Aktoren und Sensoren erweitert werden.

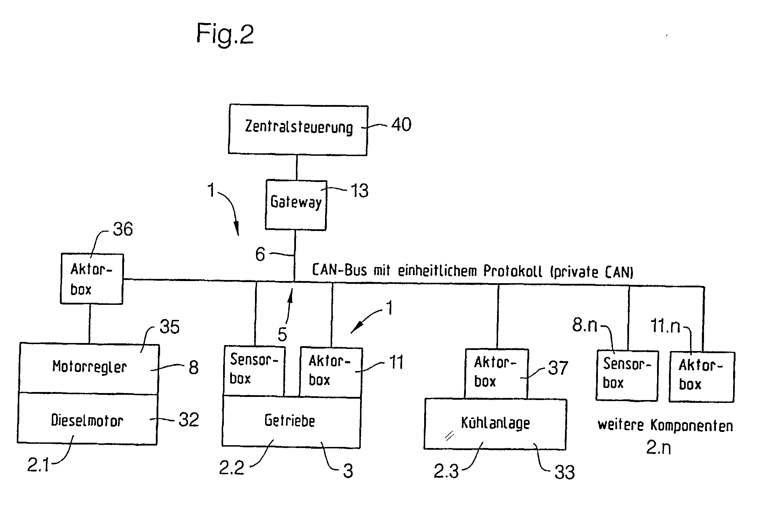

Die erfindungsgemäße dezentrale Ausführung der Vorrichtung 1 zur elektronischen Steuerung einer Antriebskomponente 2, beispielsweise des Turbogetriebes 3 bietet zusätzlich die Möglichkeit in einer entsprechenden Weiterbildung die Funktionen der Getriebebaueinheit 3 mit anderen Antriebskomponenten 2.1 bis 2.n, in der Figur 2 für die Antriebskomponenten 2.1 bis 2.4 dargestellt, zu koordinieren. Die Antriebskomponente 2.1 wird dabei von der Antriebsmaschine des Antriebssystems, welche beispielsweise in Form einer Verbrennungskraftmaschine in Form eines Dieselmotors 32 ausgeführt ist, gebildet. Als Antriebskomponente 2.2 fungiert die Turbogetriebebaueinheit 3, als Antriebskomponente 2.3 die Kühlanlage und als Antriebskomponente 2.4 eine beliebige Antriebskomponente. Die Vorrichtung 1 zur elektronischen Steuerung der Turbogetriebebaueinheit 3 wird dazu um geeignete Komponenten erweitert, beispielsweise ein sogenanntes Interface 34 zum Dieselmotorregler 35. Diese Komponenten werden dabei direkt an das interne Kommunikationsnetzwerk 5 angeschlossen. Der Grundaufbau der Elemente der Vorrichtung 1 zur elektronischen Steuerung der Turbogetriebebaueinheit 3 entspricht dabei im wesentlichen dem in der Figur 1 beschriebenen, weshalb für gleiche Elemente die gleichen Bezugszeichen verwendet werden und an dieser Stelle nicht noch einmal genauer auf den Aufbau eingegangen wird. Erkennbar ist in der Figur 2 dazu, daß der Turbogetriebebaueinheit 3 die Einrichtung 8 in Form der Sensorbox und die Einrichtung 11 in Form der Aktorbox unmittelbar zugeordnet sind und über den CAN-Bus 6 mit der Einrichtung 13 in Form eines sogenannten Gateways verbunden sind. Des weiteren angeschlossen an das Kommunikationsnetzwerk 5 sind die Einrichtungen zur Ansteuerung wenigstens einer Stelleinrichtung zur Beeinflussung der Funktionsweise von Verbrennungskraftmaschine 32 und Kühlanlage 33, wobei diese Einrichtungen mit 36 und 37 bezeichnet sind. In Analogie gilt diese Aussage auch für die weiteren Komponenten 2.n. Diesen kann jeweils gemeinsam oder getrennt eine entsprechende Einrichtung zur Erfassung und/oder Auswertung der generierten Signale in Form einer Sensorbox 8.n und einer Einrichtung zur Ansteuerung einer Stelleinrichtung zur Beeinflussung der Funktionsweise der entsprechenden Antriebskomponente 3.n, hier mit 11.n bezeichnet, zugeordnet werden.

Die Kopplung der einzelnen Einrichtung 8, 8.n bzw. 11, 11.n und 36 bzw. 37 mit der Einrichtung 13 erfolgt dabei über das Kommunikationsnetzwerk 5 in Form des CAN-Busses 6. Die Einrichtung 13 zur Anpassung der Signale in Form des sogenannten Gateways weist dazu wenigstens ebenfalls entsprechende Eingänge 38.1 bis 38.n und Ausgänge 39.1 bis 39.n auf. Jeweils ein Eingang 38.1 und ein Ausgang 39.1 sind dabei mit dem Kommunikationsnetzwerk 5 verbunden, während jeweils ein Eingang und/oder ein Ausgang 38.n bzw. 39.n mit einer übergeordneten Zentralsteuerung 40 koppelbar ist. Die Ein- und Ausgänge 38 bzw. 39 können dabei beispielsweise von seriellen Leitungspaaren gebildet werden.

Bei der in der Figur 2 dargestellten Konfiguration besteht dabei die Möglichkeit, unter Berücksichtigung der Funktionsgrößen der anderen Antriebskomponenten 2.1 bis 2.n und deren Ansteuerung ein entsprechendes Motor-Getriebemanagement zu realisieren, wobei die Anzahl der erforderlichen Steuereinrichtungen minimal gehalten wird. Es bedarf somit keinerlei Kopplung der bei konventionellen Lösungen den einzelnen Antriebskomponenten zugeordneten Steuereinrichtungen untereinander, sondern die für die Funktionsweise anderer Antriebskomponenten an einer bestimmten Antriebskomponente generierten Signale werden dabei jeder der dafür in Frage kommenden Antriebskomponente über das Kommunikationsnetzwerk 5 zur Verfügung gestellt. Dies gilt in Analogie auch für die entsprechenden Stellgrößen zur Ansteuerung einzelner Stelleinrichtungen zur wenigstens mittelbaren Beeinflussung der Funktionsweise einzelner Antriebskomponenten 2.1 bis 2.n.

Die erfindungsgemäße Lösung, insbesondere in der Weiterentwicklung zur Koordination der Funktionen der Getriebebaueinheit 3 mit anderen Antriebskomponenten bewirkt, daß Regelungsvorgänge dezentralisiert werden. Es ergibt sich somit ein Regelalgorithmus, der in einem virtuellen Steuergerät, bestehend aus einer Vielzahl von getrennten Hardwarekomponenten, abläuft. Dabei ist eine zentrale Abspeicherung und Weitergabe von Fehlerereignissen in allen Antriebskomponenten fakultativ möglich. Dies führt zu einer Vereinfachung für den Kundendienst, da in toto nur noch ein Diagnosesystem für den gesamten Antriebsstrang erforderlich wird. Vor Weitergabe an die Schienenfahrzeugsteuerung wird eine Filterung und Vorverarbeitung von Diagnoseinformationen möglich. Über die Vorrichtung zur elektronischen Steuerung 1 werden dazu die Diagnoseschnittstellen aller elektronischen Steuergeräte an den Antriebskomponenten ausgewertet.

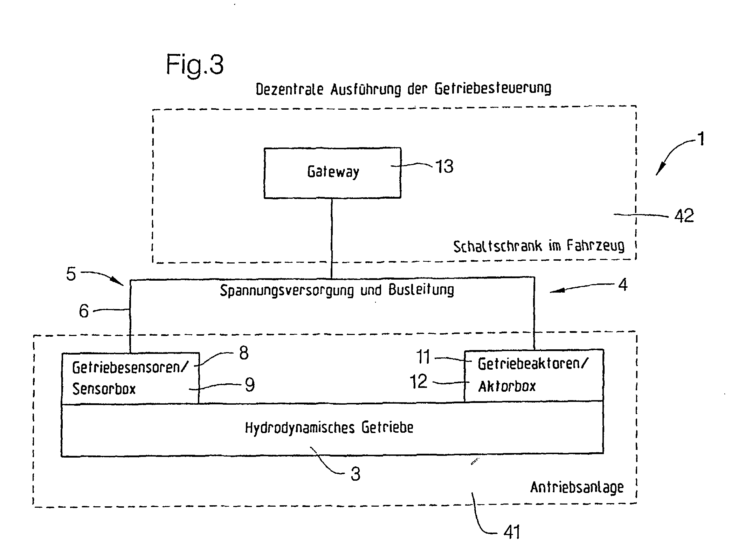

Figur 3 vedeutlicht noch einmal in schematisch vereinfachter Darstellung die dezentrale Ausführung der Getriebesteuerung, insbesondere der Vorrichtung 1 zur elektronischen Steuerung einer Getriebebaueinheit 3 in Form eines hydrodynamischen Getriebes, beispielsweise Turbogetriebes 3. Insbesondere wird in dieser Figur die dezentrale Anordnung der einzelnen Komponenten bezüglich ihrer Zuordnung zu den einzelnen Komponenten im Antriebsstrang dargestellt. Daraus ist ersichtlich, daß die zur Einrichtung 4 zur elektronischen Steuerung des Turbogetriebes 3 gehörenden Komponenten in Form der Einrichtungen 8 und 11 sowie den entsprechenden Einrichtungen 9 und 12 in unmittelbarer räumlicher Nähe der Turbogetriebebaueinheit 3 in der Antriebsanlage 41 angeordnet sind, während die Einrichtung 13 zur Anpassung der Signale an übergeordnete Steuereinrichtungen oder Signalleitungen in Form eines sogenannten Gateways räumlich getrennt im Schaltschrank des Schienenfahrzeuges 42 angeordnet sein kann, wobei die Kopplung über ein entsprechendes Kommunikationsnetzwerk 5, beispielsweise in Form eines CAN-Busses 6, erfolgt. Dies bedeutet, daß trotz erheblicher räumlicher Entfernung zwischen den einzelnen Komponenten der Steuereinrichtung 4 die Anzahl der zur Verarbeitung einzelner Größen sowie Ansteuerung der einzelnen Elemente erforderlichen Leitungen minimal gehalten werden kann, bei Ausführung als CAN-Bus ist dazu lediglich ein serielles Leitungspaar erforderlich. Über das Kommunikationsnetzwerk 5 erfolgt dabei die Spannungsversorgung der einzelnen Elemente. Die Anpassung der Spannungsversorgung einzelner Antriebskomponenten erfolgt dabei entweder zentral über die Einrichtung 13 oder dezentral an jeder einzelnen Antriebskomponente 2.

Erfindungsgemäß ist jeder Antriebskomponente eine Einrichtung 4 zur elektronischen Steuerung zugeordnet, welche aus wenigstens drei Komponenten besteht, wobei zumindest die Einrichtung zur Anpassung der Signale an übergeordnete Steuereinrichtungen Bestandteil einer Mehrzahl von Steuereinrichtungen 4 zur elektronischen Steuerung von Antriebskomponenten sein kann. Dies kann zusätzlich auch für die Einrichtungen zur Erfassung und/oder Auswertung von generierten Signalen und/oder Einrichtungen zur Ansteuerung der Stelleinrichtungen gelten. Die Erfindung ist somit keineswegs auf die in den Figuren 1 bis 3 beschriebenen Ausführungen beschränkt. Modifikationen hinsichtlich des konkreten Einsatzfalles sind möglich und liegen im Ermessen des zuständigen Fachmannes, vorausgesetzt diese Änderungen verbleiben innerhalb des umfangs der nachfolgenden Patentansprüche.

### Bezugszeichenliste

- 1: Vorrichtung zur elektronischen Steuerung einer Getriebebaueinheit für Schienenfahrzeuge
- 2: Antriebskomponente
- 3: Turbogetriebe
- 4: Einrichtung zur elektronischen Steuerung des Turbogetriebes, Schienenfahrzeuggetriebe-Steuereinrichtung
- 5: Kommunikationsnetzwerk
- 6: CAN-Bus
- 7: Gehäuse
- 8: Einrichtung zur Erfassung und/oder Auswertung einer mittels einer Einrichtung zur Erfassung von wenigstens einer physikalischen Größe generierten Signales
- 9: Einrichtung zur Erfassung wenigstens einer physikalischen Größe
- 10: Sensor
- 11: Einrichtung zur wenigstens mittelbaren Ansteuerung wenigstens einer Stelleinrichtung zur wenigstens mittelbaren Beeinflussung der Funktionsweise einer Antriebskomponente
- 12: Aktor
- 13: Einrichtung zur Anpassung von Signalen an ein über-/ oder nebengeordnetes Steuersystem und/oder Signalleitungen
- 14: virtuelles Steuergerät
- 15: Gehäuse
- 16: Gehäuse
- 17: Sensorauswerteinheit
- 18: Signalumwandlungseinheit
- 19: Vergleichseinheit
- 20: Schnittstelleneinheit
- 21: Eingang
- 22: Eingang
- 23: Ausgang
- 24: Schnittstelleneinheit
- 25: Eingang
- 26: Ausgang
- 27: Einheit zur Ermittlung einer Stellgröße
- 28: Regelalgorithmus
- 29: Leistungsausgang
- 30: Ausgang
- 31: Regelstrecke
- 32: Dieselmotor
- 33: Kühlanlage
- 34: Interface
- 35: Dieselmotorenregler
- 36: Aktorbox
- 37: Aktorbox
- 38.1 - 38.n: Eingang
- 39.1 - 39.n: Ausgang
- 40: Zentralsteuerung
- 41: Antriebsanlage
- 42: Schaltschrank

## Patentansprüche

1. Schienenfahrzeugantriebskomponenten-Steuersystem (1) umfassend
- eine Steuereinrichtugn (4) zur elektronischen Steuerung der Antriebskomponente (2)
- mit wenigstens einer Einrichtung (9) zur Erfassung wenigstens einer physikalischen Größe und
- mit einer Einrichtung (11) zur wenigstens mittelbaren Ansteuerung der Stelleinrichtung zur wenigstens mittelbaren Beeinflussung der Funktionsweise der Antriebskomponente (2);
**gekennzeichnet durch** folgende Merkmale:
- die Steuereinrichtung (4) umfasst weiterhin
- eine Einrichtung (8) zur Erfassung und/oder Auswertung wenigstens eines generierten Signales, das der wenigstens einen physikalischen Größe entspricht, die mittels der wenigstens einen Einrichtung (9) erfasst worden ist, und
- eine Einrichtung (13) zur Anpassung des wenigstens eines Signales an ein übergeordnetes oder weiteres Steuersystem und
- die einzelnen Komponenten der Steuereinrichtung (4) sind dezentral zueinander angeordnet und unter Bildung eines virtuellen Steuergerätes miteinander über wenigstens ein Kommunikationsnetzwerk (5) miteinander gekoppelt.

2. Schienenfahrzeugantriebskomponenten-Steuersystem (1) nach Anspruch 1, **dadurch gekennzeichnet, daß** die Einrichtung (8) zur Erfassung und/oder Auswertung wenigstens eines generierten Signales in unmittelbarer räumlicher Nähe zur Antriebskomponente (2) angeordnet ist.

3. Schienenfahrzeugantriebskomponenten-Steuersystem nach Anspruch 1 oder 2, **dadurch gekennzeichnet, daß** die Einrichtung (11) zur wenigstens mittelbaren Ansteuerung der Stelleinrichtung in unmittelbarer räumlicher Nähe zur Antriebskomponente angeordnet ist.

4. Schienenfahrzeugantriebskomponenten-Steuersystem nach Anspruch 2 oder 3, **dadurch gekennzeichnet, daß** die Einrichtungen (8,11) am Gehäuse (7) der Antriebskomponente (2) angeordnet sind.

5. Schienenfahrzeugantriebskomponenten-Steuersystem nach Anspruch 1, **dadurch gekennzeichnet, daß** die Einrichtung (8) zur Erfassung und/oder Auswertung wenigstens eines Signales im Gehäuse (7) der Antriebskomponente (2) integriert ist.

6. Schienenfahrzeugantriebskomponenten-Steuersystem nach Anspruch 1 oder 5, **dadurch gekennzeichnet, daß** die Einrichtung (11) zur wenigstens mittelbaren Austeuerung der Stelleinrichtung im Gehäuse (7) der Antriebskomponente (2) integriert ist.

7. Schienenfahrzeugantriebskomponenten-Steuersystem nach Anspruch 1 oder 5, **dadurch gekennzeichnet, daß** die Einrichtung (9) zur Erfassung wenigtens einer physikalischen größe im Gehäuse (7) des Antriebskomponente (2) integriert ist.

8. Schienenfahrzeugantriebskomponenten-Steuersystem nach einem der Ansprüche 1 bis 7, **dadurch gekennzeichnet, daß** eine Mehrzahl von Einrichtungen (8) zur Erfassung und/oder Auswertung von Signalen vorgesehen ist, wobei diese jeweils wenigstens einer oder mehreren Einrichtungen (9) zur Erfassung von physikalischen Größen allein oder gemeinsam zuordenbar sind.

9. Schienenfahrzeugantriebskomponenten-Steuersystem nach einem der Ansprüche 1 bis 8, **dadurch gekennzeichnet, daß** eine Mehrzahl von Einrichtungen (11) zur Ansteuerung der Stelleinrichtung zur wenigstens mittelbaren Beeinflussung der Funktionsweise der Antriebskomponente (2) vorgesehen sind, die einer Mehrzahl von den Stelleinrichtungen zugeordneten oder in diese integrierten Aktoren (12) allein und/oder gemeinsam zuordenbar sind.

10. Schienenfahrzeugantriebskomponenten-Steuersystem nach einem der Ansprüche 1 bis 9, **dadurch gekennzeichnet, daß** das Kommunikationsnetzwerk (5) wenigstens ein Mittel zur seriellen Datenübertragung umfaßt.

11. Schienenfahrzeugantriebskomponenten-Steuersystem nach Anspruch 10, **dadurch gekennzeichnet, daß** das Kommunikationsnetzwerk (5) als CAN-Bus (6) ausgeführt ist.

12. Schienenfahrzeugantriebskomponenten-Steuersystem nach einem der Ansprüche 1 bis 10, **dadurch gekennzeichnet, daß** die Einrichtung (13) zur Anpassung der Signale Bestandteil einer Vorrichtung zur Steuerung einer weiteren zweiten Antriebskomponente ist.

13. Schienenfahrzeugantriebskomponenten-Steuersystem nach einem der Ansprüche 1 bis 12, **dadurch gekennzeichnet, daß** das Kommunikationsnetzwerk (5) die Einrichtungen (8) zur Erfassung und/oder Auswertung von Signalen und/oder Einrichtungen (11) zur Ansteuerung von Stelleinrichtungen, die anderen zweiten Antriebskomponenten zugeordnet sind, mit den Einrichtungen zur Erfassung und/oder Auswertung von Signalen bzw. den Einrichtungen zur Ansteuerung der Stelleinrichtungen der ersten Antriebskomponente verbindet.

14. Schienenfahrzeugantriebskomponenten-Steuersystem nach einem der Ansprüche 1 bis 13, **gekennzeichnet durch** die folgenden Merkmale:
14.1 es ist eine weitere zweite Steuereinrichtung (40) vorgesehen, welche der ersten Steuereinrichtung (4) übergeordnet ist und zur Steuerung des Schienenfahrzeugmanagements dient;
14.2 die erste und die zweite Steuereinrichtung (4.40) sind elektrisch über das Kommunikationsnetzwerk (5) miteinander verbunden.

15. Schienenfahrzeugantriebskomponenten-Steuersystem (1) nach einem der Ansprüche 1 bis 14, **dadurch gekennzeichnet, daß** das Kommunikationsnetzwerk (5) als Datenspeicher fungiert.

16. Schienenfahrzeug mit einem Antriebsstrang, umfassend mindestens eine der nachfolgend genannten Antriebskomponenten:
- eine Verbrennungskraftmaschine
- eine Drehzahl-/Drehmomentenübertragungseinrichtung
- mit einem Schienenfahrzeugantriebskomponenten-Steuersystem (1) zur Steuerung wenigstens einer der genannten Antriebskomponenten gemäß einem der Merkmale 1 bis 15.

17. Schienenfahrzeug mit einem Antriebsstrang, umfassend mindestens eine der nachfolgend genannten Antriebskomponenten:
- eine Antriebsmaschine in Form einer elektrischen Maschine, welche über eine Energiespeichereinheit und/oder eine Verbrennungskraftmaschinen-Generatoreinheit wenigstens mittelbar antreibbar ist;
- mit einem Schienenfahrzeugantriebskomponenten-Steuersystem zur Steuerung wenigstens einer der genannten Antriebskomponenten gemäß einem der Merkmale 1 bis 15.

## Claims

1. A railroad vehicle drive component control system (1), comprising
- a control device (4) for the electronic control of the drive component (2);
- with at least one device (9) for detecting at least one physical variable, and
- with a device (11) for triggering at least indirectly the actuating device for influencing at least indirectly the function of the drive component (2);
**characterized by** the following features:
- the control device (4) further comprises
- a device (8) for detecting and/or evaluating at least one generated signal which corresponds to the at least one physical variable which has been detected by the at least one device (9), and
- a device (13) for adjusting the at least one'signal to a superset or further control system, and
- the individual components of the control device (4) are arranged in a decentralized manner with respect to each other and are coupled with each other via at least one communication network (5) by forming a virtual control device with each other.

2. A railroad vehicle drive component control system (1) as claimed in claim 1, **characterized in that** the device (8) for detecting and/or evaluating at least one generated signal is arranged in close spatial proximity to the drive component (2).

3. A railroad vehicle drive component control system (1) as claimed in claim 1 or 2, **characterized in that** the device (11) for the at least indirect triggering of the actuating device is arranged in close spatial proximity to the drive component.

4. A railroad vehicle drive component control system as claimed in claim 2 or 3, **characterized in that** the devices (8, 11) are arranged on the housing (7) of the drive component (2).

5. A railroad vehicle drive component control system as claimed in claim 1, **characterized in that** the device (8) for detecting and/or evaluating at least one signal is integrated in the housing (7) of the drive component (2).

6. A railroad vehicle drive component control system as claimed in claim 1 or 5, **characterized in that** the device (11) for the at least indirect triggering of the actuating device is integrated in the housing (7) of the drive component (2).

7. A railroad vehicle drive component control system as claimed in claim 1 or 5, **characterized in that** the device (9) for detecting at least one physical variable is integrated in the housing (7) of the drive component (2).

8. A railroad vehicle drive component control system as claimed in one of the claims 1 to 7, **characterized in that** a plurality of devices (8) are provided for detecting and/or evaluating signals, with the same each being assignable alone or jointly to at least one or several devices for detecting physical variables.

9. A railroad vehicle drive component control system as claimed in one of the claims 1 to 8, **characterized in that** a plurality of devices (11) for triggering the actuating device are provided for the at least indirect influencing of the function of the drive component (2), which plurality of devices are assignable alone or jointly to a plurality of actuators (12) assigned to the actuating devices or integrated in the same.

10. A railroad vehicle drive component control system as claimed in one of the claims 1 to 9, **characterized in that** the communication network (5) comprises at least one means for serial data transmission.

11. A railroad vehicle drive component control system as claimed in claim 10, **characterized in that** the communication network (5) is configured as a CAN bus (6).

12. A railroad vehicle drive component control system as claimed in one of the claims 1 to 10, **characterized in that** the device (13) for adjusting the signals is a component of an apparatus for controlling a further second drive component.

13. A railroad vehicle drive component control system as claimed in one of the claims 1 to 12, **characterized in that** the communication network (5) connects the devices (8) for detecting and/or evaluating signals and/or devices (11) for triggering actuating devices which are assigned to other second drive components with the devices for detecting and/or evaluating signals or the devices for triggering the actuating devices of the first drive component.

14. A railroad vehicle drive component control system as claimed in one of the claims 1 to 13, **characterized by** the following features:
14.1 a further second control device (40) is provided which is superordinate to the first control device and is used for controlling the railroad vehicle management;
14.2 the first and second control device (4, 40) are electrically mutually connected via the communication network;

15. A railroad vehicle drive component control system (1) as claimed in one of the claims 1 to 14, **characterized in that** the communication network (5) acts as a data memory.

16. A railroad vehicle with a power train, comprising at least one of the following mentioned drive components:
- an internal combustion engine;
- a speed-torque transmission device;
- with a railroad vehicle drive component control system (1) for controlling at least one of the said drive components according to one of the features 1 to 15.

17. A railroad vehicle with a power train, comprising at least one of the following drive components:
- a driving machine in form of an electric machine which can be driven at least indirectly by way of an energy storage unit and/or an internal combustion engine generator unit;
- with a railroad vehicle drive component control system (1) for controlling at least one of the said drive components according to one of the features 1 to 15.

## Revendications

1. Système de commande (1) des éléments constitutifs de la partie motrice de véhicules ferroviaires comprenant
- un dispositif de commande (4) pour la commande électronique de l'élément constitutif (2) de la partie motrice
- avec au moins un dispositif (9) pour l'enregistrement d'au moins une grandeur physique et
- avec un dispositif (11) pour la commande du moins indirecte du dispositif d'ajustage destiné à influencer du moins indirectement le mode de fonctionnement de l'élément constitutif (2) de la partie motrice ;
**caractérisé par** les dispositions suivantes :
- le dispositif de commande (4) comporte par ailleurs
- un dispositif (8) pour enregistrer et/ou interpréter au moins un signal généré correspondant à l'au moins une grandeur physique qui a été enregistrée au moyen de l'au moins un dispositif (9) et
- un dispositif (13) destiné à adapter l'au moins un signal à un système de commande supérieur ou complémentaire et
- les différents éléments constitutifs du dispositif de commande (4) sont disposés de manière décentralisée et sont reliés ensemble par l'intermédiaire d'au moins un réseau de communication (5) de manière à former un appareil de commande virtuel.

2. Système de commande (1) des éléments constitutifs de la partie motrice de véhicules ferroviaires selon la revendication 1, **caractérisé en ce que** le dispositif (8) pour enregistrer et/ou interpréter au moins un signal généré est disposé à proximité immédiate de l'élément constitutif (2) de la partie motrice.

3. Système de commande des éléments constitutifs de la partie motrice de véhicules ferroviaires selon la revendication 1 ou 2, **caractérisé en ce que** le dispositif (11) pour la commande du moins indirecte du dispositif d'ajustage est disposé à proximité immédiate de l'élément constitutif de la partie motrice.

4. Système de commande des éléments constitutifs de la partie motrice de véhicules ferroviaires selon la revendication 2 ou 3, **caractérisé en ce que** les dispositifs (8, 11) sont disposés sur le boîtier (7) de l'élément constitutif (2) de la partie motrice.

5. Système de commande des éléments constitutifs de la partie motrice de véhicules ferroviaires selon la revendication 1, **caractérisé en ce que** le dispositif (8) pour enregistrer et/ou interpréter au moins un signal est intégré dans le boîtier (7) de l'élément constitutif (2) de la partie motrice.

6. Système de commande des éléments constitutifs de la partie motrice de véhicules ferroviaires selon la revendication 1 ou 5, **caractérisé en ce que** le dispositif (11) pour la commande du moins indirecte du dispositif d'ajustage est intégré dans le boîtier (7) de l'élément constitutif (2) de la partie motrice.

7. Système de commande des éléments constitutifs de la partie motrice de véhicules ferroviaires selon la revendication 1 ou 5, **caractérisé en ce que** le dispositif (9) pour l'enregistrement d'au moins une grandeur physique est intégré dans le boîtier (7) de l'élément constitutif (2) de la partie motrice.

8. Système de commande des éléments constitutifs de la partie motrice de véhicules ferroviaires selon l'une quelconque des revendications 1 à 7, **caractérisé en ce qu'**est prévue une pluralité de dispositifs (8) pour enregistrer et/ou interpréter des signaux, ceux-ci étant susceptibles d'être associés respectivement, individuellement ou ensemble, à un ou plusieurs dispositifs (9) pour l'enregistrement de grandeurs physiques.

9. Système de commande des éléments constitutifs de la partie motrice de véhicules ferroviaires selon l'une quelconque des revendications 1 à 8, **caractérisé en ce qu'**est prévue une pluralité de dispositifs (11) pour la commande du moins indirecte du dispositif d'ajustage destiné à influencer du moins indirectement le mode de fonctionnement de l'élément constitutif (2) de la partie motrice, lesquels dispositifs sont susceptibles d'être associés, individuellement et/ou ensemble, à une pluralité d'acteurs (12) associés aux dispositifs d'ajustage ou intégrés dans ceux-ci.

10. Système de commande des éléments constitutifs de la partie motrice de véhicules ferroviaires selon l'une quelconque des revendications 1 à 9, **caractérisé en ce que** le réseau de communication (5) comprend au moins un moyen de transmission sérielle des données.

11. Système de commande des éléments constitutifs de la partie motrice de véhicules ferroviaires selon la revendication 10, **caractérisé en ce que** le réseau de communication (5) est réalisé sous forme de bus CAN (6).

12. Système de commande des éléments constitutifs de la partie motrice de véhicules ferroviaires selon l'une quelconque des revendications 1 à 10, **caractérisé en ce que** le dispositif (13) pour adapter les signaux fait partie constitutive d'un dispositif pour la commande d'un deuxième élément constitutif de la partie motrice complémentaire.

13. Système de commande des éléments constitutifs de la partie motrice de véhicules ferroviaires selon l'une quelconque des revendications 1 à 12, **caractérisé en ce que** le réseau de communication (5) relie les dispositifs (8) pour enregistrer et/ou interpréter des signaux et/ou des dispositifs (11) pour la commande de dispositifs d'ajustage associés à d'autres, deuxièmes, éléments constitutifs de la partie matrice aux dispositifs pour enregistrer et/ou interpréter des signaux ou aux dispositifs pour la commande de dispositifs d'ajustage du premier élément constitutif de la partie motrice.

14. Système de commande des éléments constitutifs de la partie motrice de véhicules ferroviaires selon l'une quelconque des revendications 1 à 13, **caractérisé par** les dispositions suivantes :
14.1 un deuxième dispositif de commande complémentaire (40) est prévu qui est supérieur au premier dispositif de commande (4) et sert à commander la gestion du véhicule ferroviaire ;
14.2 le premier et le deuxième dispositif de commande (4.40) sont reliés électriquement par le réseau de communication (5).

15. Système de commande (1) des éléments constitutifs de la partie motrice de véhicules ferroviaires selon l'une quelconque des revendications 1 à 14, **caractérisé en ce que** le réseau de communication (5) fait office de mémoire de données.

16. Véhicule ferroviaire pourvu d'une partie motrice comprenant au moins un des éléments constitutifs mentionnés ci-dessous :
- un moteur à combustion interne
- un transmetteur vitesse / couple
- avec un système de commande (1) des éléments constitutifs de la partie motrice de véhicules ferroviaires selon l'une quelconque des revendications 1 à 15 pour la commande d'au moins un des éléments constitutifs de la partie motrice sus-mentionnés.

17. Véhicule ferroviaire pourvu d'une partie motrice comprenant au moins un des éléments constitutifs mentionnés ci-dessous :
- un moteur d'entraînement sous forme de moteur électrique susceptible d'être entraîné, du moins indirectement, par un groupe accumulateur d'énergie et/ou un groupe générateur de moteur à combustion interne ;
- un système de commande (1) des éléments constitutifs de la partie motrice de véhicules ferroviaires selon l'une quelconque des revendications 1 à 15 pour la commande d'au moins un des éléments constitutifs de la partie motrice sus-mentionnés.
